# EUROPÄISCHE PATENTSCHRIFT

(11) **EP 0 350 612 B1**
(45) Veröffentlichungstag und Bekanntmachung des Hinweises auf die Patenterteilung: **01.09.1993**
(21) Anmeldenummer: 89109993.9
(22) Anmeldetag: 02.06.1989
(51) Int. Cl.: G01D 21/02, G01L 9/00, G01K 13/02

(54) **Messeinrichtung zur Erfassung des Drucks und der Temperatur**
Measuring arrangement for establishing pressure and temperature
Dispositif de mesure de pression et température

(30) Priorität: 11.07.1988 DE 3823449
(43) Veröffentlichungstag der Anmeldung: 17.01.1990
(73) Patentinhaber: ROBERT BOSCH GMBH, 70442 Stuttgart (DE)
(72) Erfinder: Nolting, Peter, Dipl.-Ing., D-7582 Bühlertal (DE); Maurer, Thomas, Dipl.-Ing., D-3501 Fuldatal (DE)

(56) Entgegenhaltungen:
- EP-A- 0 205 789
- GB-A- 2 003 659

## Beschreibung

### Stand der Technik

Die Erfindung geht aus von einer Meßeinrichtung zur Erfassung des Drucks und der Temperatur eines strömenden Mediums nach der Gattung des Anspruchs 1. Bei einer bekannten Meßeinrichtung sind ein Drucksensor und ein Temperatursensor in einem Gehäuse untergebracht, das über eine einzige Bohrung mit dem durch ein Rohr strömenden Medium verbunden ist. Bei Meßeinrichtungen mit nur einer Bohrung findet kaum eine Strömung innerhalb des Druckraums des Sensors statt. Dabei können Temperaturunterschiede zwischen dem zu bestimmenden Medium und der Umgebung zu Fehlmessungen führen, da die den Drucksensor und den Temperatursensor tragende Membran über das Gehäuse die Umgebungstemperatur annimmt.

In der GB-A-2 003 659 wird eine Meßeinrichtung zur Erfassung der Temperatur eines strömenden Mediums beschrieben, die einen in einen vom Medium durchströmten Kanal ragenden Fortsatz aufweist. In Strömungsrichtung des Mediums gesehen ist in der Rückwand des Fortsatzes eine parallel zur Strömungsrichtung verlaufende Einlaßöffnung und an der Stirnseite des Fortsatzes eine senkrecht zur Strömungsrichtung verlaufende Auslaßöffnung ausgebildet. Aufgrund des herrschenden Druckunterschieds ergibt sich ein Druckmittelfluß von der Einlaß- zur Auslaßöffnung. In einer ersten in die Verbindung zwischen der Auslaß- und der Einlaßöffnung mündende Bohrung ist ein erster Temperaturfühler und zurückgesetzt in einer zweiten in die Verbindung mündende Bohrung ist ein Referenztemperaturfühler eingesetzt. Es wird hier nur jeweils die Temperatur oder ein anderer physikalischer Meßwert des durchströmenden Mediums erfaßt.

### Vorteile der Erfindung

Die erfindungsgemäße Meßeinrichtung mit den kennzeichnenden Merkmalen des Anspruchs 1 hat demgegenüber den Vorteil, daß eine relativ genaue Erfassung der Temperatur des durch eine Leitung strömenden Mediums möglich ist. Das Medium innerhalb des Druckraums der Meßeinrichtung hat dieselbe Temperatur wie das strömende Medium in der Leitung. Da das Medium durch den Druckraum hindurchströmt, ist der Wärmeübergang zwischen dem Medium und der Membran, auf der der Drucksensor und der Temperatursensor angeordnet sind, verbessert. Die durchströmende Menge ist jedoch nicht so groß, daß das Drucksignal merklich verfälscht wird.

Durch die in den Unteransprüchen aufgeführten Maßnahmen sind vorteilhafte Weiterbildungen des im Anspruch 1 angegebenen Sensors möglich.

### Zeichnung

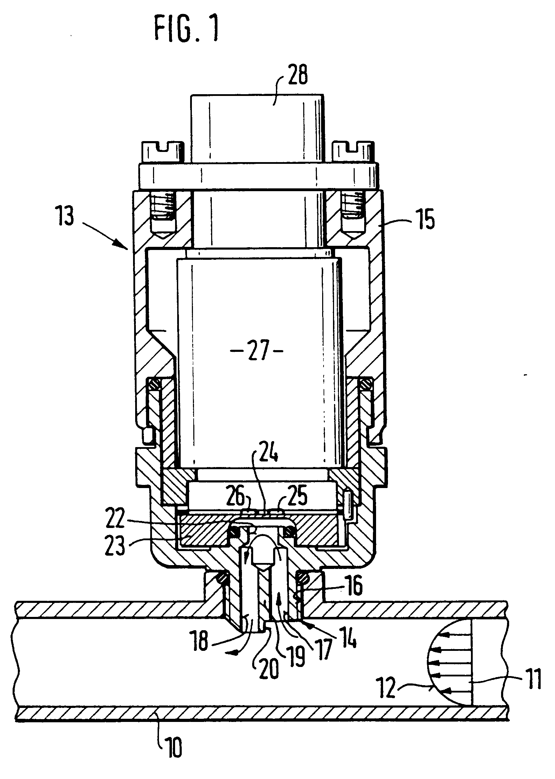

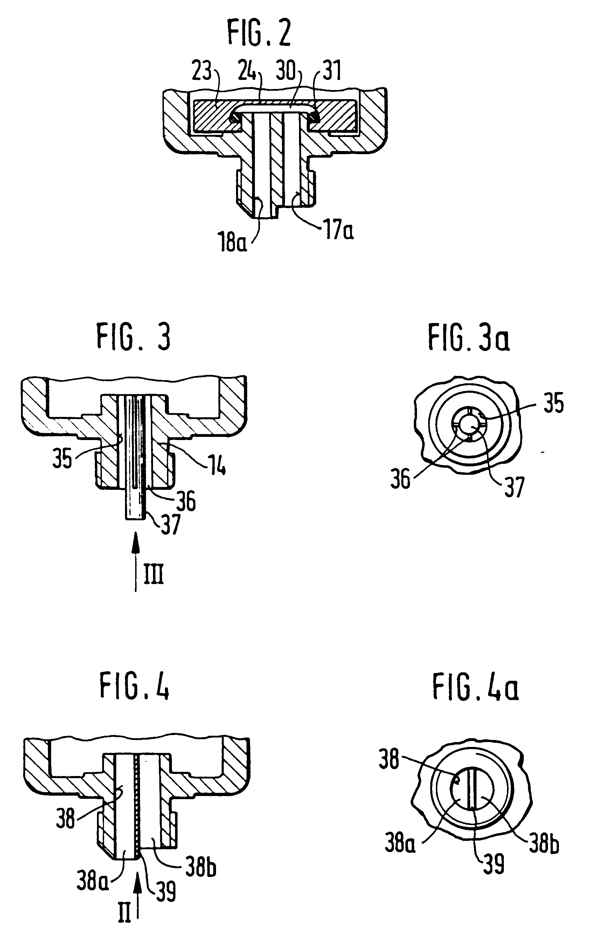

Ein Ausführungsbeispiel der Erfindung ist in der Zeichnung dargestellt und in der nachfolgenden Beschreibung näher erläutert. Es zeigen die Figur 1 einen Schnitt durch eine Meßeinrichtung und die Figuren 2 bis 4 je eine Abwandlung des Ausführungsbeispiels.

### Beschreibung des Ausführungsbeispiels

In Figur 1 ist mit 10 ein Rohr bezeichnet, durch das ein Medium 11 strömt, dessen Strömungsprofil 12 eingezeichnet ist. Das Rohr 10 kann das Ansaugrohr einer im übrigen nicht dargestellten Brennkraftmaschine sein, durch welches die Ansaugluft strömt, deren Temperatur und Druck durch eine Meßeinrichtung 13 erfaßt und aufbereitet werden soll. Hierzu ist der Anschluß 14 des Gehäuses 15 der Meßeinrichtung 13 in eine Öffnung 16 des Rohrs 10 eingeschraubt oder eingesetzt und mit Hilfe eines Dichtrings abgedichtet. Im Anschluß 14 sind von der Seite des Rohrs 10 her zwei parallel verlaufende Bohrungen 17, 18 derart eingebracht, daß ein etwa mittiger Steg im Bereich der Achse des Anschlusses 14 entsteht. Die Wand des von der Strömungsfront 12 des Mediums 11 zuerst erreichten Bohrung 17 schließt etwa bündig mit der Innenwand des Rohrs 10 ab. Die andere Bohrung 18 ragt in das Rohr 10 hinein, so daß zwischen den Bohrungen 17, 18 eine Stufe 20 entsteht. Ferner ist von der dem Rohr 10 abgewandten Seite des Anschlusses 14 eine dritte Bohrung 22 eingebracht, die etwa achsgleich mit dem Anschluß 14 ausgebildet ist. Der Durchmesser der dritten Bohrung 22 ist so groß, daß diese Bohrung 22 die beiden anderen Bohrungen 19, 18 gleichzeitig schneidet. Die dritte Bohrung 22 bildet den eigentlichen Druckraum, der von einer Scheibe 23 abgeschlossen ist. Die Scheibe 23 weist im Bereich der Bohrung 22 einen als Membran 24 dienenden dünnen Abschnitt auf. Auf dieser Membran 24 sind auf der dem Druckraum abgewandten Seite ein Drucksensor 25 und ein Temperatursensor 26 angeordnet. Der Drucksensor 25 kann aus Dehnmeßstreifen oder anderen, aus dem Stand der Technik bekannten, die Durchbiegung der Membran 24 bestimmenden Meßelemente bestehen. Die Meßeinrichtung 13 weist ferner in herkömmlich bekannter Weise eine im Gehäuse 15 angeordnete Elektronik 27 und deren elektrische Anschlüsse 28 auf.

Durch die in das Rohr 10 ragende Bohrung 18 wird der Durchmesser des Rohrs 10 in diesem Bereich geringfügig verkleinert, was zu einer höheren Strömungsgeschwindigkeit des Mediums 11 führt. Ferner ist durch die unterschiedliche Länge der beiden Bohrungen 17, 18 die Strömungsgeschwindigkeit an der Öffnung der Bohrung 18 höher als an der Öffnung der Bohrung 17 und damit der Druck kleiner als an der Bohrung 17. Diese Druckdifferenz bewirkt eine Strömung des Mediums 11 durch die Bohrung 17, die Bohrung 22 und die Bohrung 18. In der Bohrung 18 entsteht ein sogenannter Strahlpumpeneffekt, der bewirkt, daß das Medium 11 durch die Bohrung 18 abgesaugt wird. Über die Bohrungen 17 und 22 strömt entsprechendes Medium nach, so daß das Medium 11 in der den Druckraum bildenden Bohrung 22 in Bewegung ist und durch diese hindurchströmt. Dadurch wird erreicht, daß das Medium 11 im Druckraum dieselbe Temperatur wie das Medium im Rohr 10 hat. Ferner wird durch die permanente Strömung des Mediums 11 im Druckraum auch der Wärmeübergang zwischen dem Medium 11 und der Scheibe 23 verbessert.

In den Figuren 2 bis 4 sind unterschiedliche Ausbildungen des Anschlusses 14 für den Strahlpumpeneffekt dargestellt. Bei der Abwandlung nach Figur 2 ist gegenüber der Figur 1 keine Bohrung 22 ausgebildet. Die Bohrungen 17a und 18a enden auf der dem Rohr 10 abgewandten Seite etwa bündig. Der Druckraum wird durch eine Ausnehmung 30 in der Scheibe 23 im Bereich der Membran 24 gebildet. Die Ausnehmung 30 ist mit Hilfe eines Dichtrings 31 zu den Bohrungen 17a, 18a hin abgedichtet.

In der Figur 3 ist im Anschluß 14 eine Bohrung 35 ausgebildet, in die eine mit Haltern 36 befestigte Hülse 37 eingesetzt ist. Die Hülse 37 ragt auf der dem Rohr 10 zugewandten Öffnung der Bohrung 35 über diese in das Rohr 10 hinaus, wodurch wiederum der oben ausgeführte Strahlpumpeneffekt erreicht wird.

Ferner ist es auch möglich, wie in Figur 4 dargestellt, die Wand der Bohrung 38 des Anschlusses 14 über einem Bereich von 180 Grad abzutragen und mittig in die Bohrung 38 senkrecht zur Strömungsfront eine Trennwand 39 einzusetzen, so daß die Bohrung 38 in zwei Bohrungen 38a und 38b aufgeteilt wird. Die Trennwand 39 schließt bündig mit der längeren Wand der Bohrung 38 ab.

## Patentansprüche

1. Meßeinrichtung (13) zur Erfassung des Drucks und der Temperatur eines strömenden Mediums (11), insbesondere der im Ansaugrohr einer Brennkraftmaschine strömenden Ansaugluft, mittels eines Drucksensors (25) und eines Temperatursensors (26), dadurch gekennzeichnet, daß in die das Medium (11) führende Leitung (10) mindestens zwei Leitungen (17, 18) münden, wobei die Leitungen (17, 18) zu einem Druckraum (22) führen, durch den die Leitungen (17, 18) verbunden sind und wo sich an einer Membran (24) des Druckraums (22) der Druck- (25) und der Temperatursensor (26) befinden, und daß die Leitungen (17, 18) senkrecht zur Strömungsrichtung des Mediums verlaufen, und die Öffnung mindestens einer Leitung (18) in die Leitung (10) des Mediums (11) ragt, so daß in den Leitungen (17, 18) eine Druckdifferenz entsteht.

2. Meßeinrichtung nach Anspruch 1, dadurch gekennzeichnet, daß die beiden Leitungen (17, 18) parallelverlaufend im Anschluß (14), mit dem die Meßeinrichtung (13) an die Leitung (10) des Mediums (11) angeordnet ist, ausgebildet sind.

3. Meßeinrichtung nach Anspruch 1 und/oder 2, dadurch gekennzeichnet, daß die Leitung (18) mit der in die Leitung (10) des Mediums (11) ragenden Öffnung in Strömungsrichtung des Mediums (11) gesehen nach der Leitung (17) angeordnet ist.

4. Meßeinrichtung nach einem der Ansprüche 1 bis 3, dadurch gekennzeichnet, daß die Öffnung der Leitung (17) fluchtend mit der Innenwand der Leitung (10) ausgebildet ist.

5. Meßeinrichtung nach einem der Ansprüche 1 bis 4, dadurch gekennzeichnet, daß innerhalb einer ersten, im Anschluß (14) der Meßeinrichtung (13) ausgebildeten Leitung (35) eine zweite Leitung (37) angeordnet ist, deren eine Öffnung sich in der ersten Leitung (35) und deren zweite Öffnung sich in der Leitung (10) des Mediums (11) befindet.

6. Meßeinrichtung nach Anspruch 5, dadurch gekennzeichnet, daß die zweite Leitung eine in der ersten Leitung (35) eingesetzte Hülse (37) ist.

7. Meßeinrichtung nach einem der Ansprüche 1 bis 4, dadurch gekennzeichnet, daß die Wandung einer im Anschluß (14) der Meßeinrichtung (13) ausgebildeten Bohrung (38) im Bereich der in die Leitung (10) ragenden Öffnung abgestuft ist und etwa im Bereich der Längsachse der Bohrung (38) eine Trennwand (39) angeordnet ist, die fluchtend mit dem längeren Bereich der Wand der Bohrung (38) abschließt.

## Claims

1. Measuring device (13) for recording the pressure and the temperature of a flowing medium (11), in particular that of the intake air flowing in the intake pipe of an internal combustion engine, by means of a pressure sensor (25) and a temperature sensor (26), characterised in that at least two conduits (17, 18) open into the conduit (10) carrying the medium (11), the conduits (17, 18) leading to a pressure space (22) by which the conduits (17, 18) are connected and where the pressure sensor (25) and the temperature sensor (26) are situated, on a diaphragm (24) of the pressure space (22), and in that the conduits (17, 18) extend perpendicularly to the direction of flow of the medium and the opening of at least one conduit (18) projects into the conduit (10) for the medium (11), with the result that a pressure difference arises in the conduits (17, 18).

2. Measuring device according to Claim 1, characterised in that the two conduits (17, 18) are formed in parallel in the connection (14) by means of which the measuring device (13) is arranged on the conduit (10) for the medium (11).

3. Measuring device according to Claim 1 and/or 2, characterised in that the opening of the conduit (18) projecting into the conduit (10) for the medium (11) is arranged behind the conduit (17), as seen in the direction of flow of the medium (11).

4. Measuring device according to one of Claims 1 to 3, characterised in that the opening of the conduit (17) is designed to be flush with the inner wall of the conduit (10).

5. Measuring device according to one of Claims 1 to 4, characterised in that arranged within a first conduit (35) formed in the connection (14) of the measuring device (13) is a second conduit (37), one opening of which is situated in the first conduit (35) and the second opening of which is situated in the conduit (10) for the medium (11).

6. Measuring device according to Claim 5, characterised in that the second conduit is a sleeve (37) inserted into the first conduit (35).

7. Measuring device according to one of Claims 1 to 4, characterised in that the wall of a hole (38) formed in the connection (14) of the measuring device (13) is stepped in the region of the opening projecting into the conduit (10) and a partition wall (39) is arranged approximately in the region of the longitudinal axis of the hole (38), ending flush with the longer region of the wall of the hole (38).

## Revendications

1. Dispositif de mesure (13) pour mesurer la pression et la température d'un milieu (11) en écoulement, en particulier de l'air d'admission s'écoulant dans le tuyau d'aspiration d'un moteur à combustion interne, au moyen d'un détecteur de pression (25) et d'un détecteur de température (26), dispositif de mesure caractérisé en ce que dans la conduite (10) conduisant le milieu (11) débouchent au moins deux conduites (17, 18) qui mènent à une chambre de pression (22), par laquelle sont reliées les conduites (17, 18) et où se trouvent sur une membrane (24) de la chambre de pression (22) le détecteur de pression (25) et le détecteur de température (26) et en ce que les conduites (17, 18) s'étendent perpendiculairement au sens d'écoulement de l'agent et l'ouverture d'au moins une conduite (18) pénètre dans la conduite (10) de l'agent, de telle sorte qu'il y ait une différence de pression dans les conduites (17, 18).

2. Dispositif de mesure selon la revendication 1, caractérisé en ce que les deux conduites (17, 18) sont formées de façon à s'étendre en parallèle dans le raccord (14), avec lequel le dispositif de mesure (13) est disposé sur la conduite (10) de l'agent (11).

3. Dispositif de mesure selon la revendication 1 et/ou 2, caractérisé en ce que la conduite (18) est disposée après la conduite (17) avec l'ouverture pénétrant dans la conduite (10) du milieu (11) vu dans le sens d'écoulement du milieu (11).

4. Dispositif de mesure selon les revendications 1 à 3, caractérisé en ce que l'ouverture de la conduite (17) est en alignement avec la paroi interne de la conduite (10).

5. Dispositif de mesure selon l'une des revendications 1 à 4, caractérisé en ce qu'à l'intérieur d'une première conduite (35) constituée dans le raccord (14) du dispositif de mesure (13) est disposée une deuxième conduite (37) dont une ouverture se trouve dans la première conduite (35) et dont la seconde ouverture se trouve dans la conduite (10) du milieu (11).

6. Dispositif de mesure selon la revendication 5, caractérisé en ce que la deuxième conduite est une douille (37) montée dans la première conduite (35).

7. Dispositif de mesure selon l'une des revendications 1 à 4, caractérisé en ce que la paroi d'un alésage (38) constitué dans le raccord (14) du dispositif de mesure (13) présente un gradin dans la zone de l'ouverture pénétrant dans la conduite (10) et une paroi de séparation (39) est disposée à peu près dans la zone de l'axe longitudinal de l'alésage (38) paroi qui se raccorde à fleur avec la zone plus longue de la paroi de l'alésage (38).
